# EUROPEAN PATENT APPLICATION

(11) **EP 1 903 750 A1**
(43) Date of publication of application: **26.03.2008**
(21) Application number: 07104793.0
(22) Date of filing: 23.03.2007
(51) Int. Cl.: H04L 29/08

(54) **Load distributing apparatus**

(30) Priority: 21.09.2006 JP 2006256350
(71) Applicant: FUJITSU LIMITED, Kawasaki-shi, Kanagawa 211-8588 (JP)
(72) Inventor: Ono,, Masayuki, Kawasaki-shi Kanagawa 211-8588 (JP)
(74) Representative: Stebbing, Timothy Charles

(57) **Abstract**

A load distributing apparatus (100) for managing the execution of a processing task, for which a request was issued from a client terminal (101-103), by multiple information processing apparatuses (104-109). The information processing apparatuses are grouped so as to individually process the same part tasks in parallel. The load distributing apparatus (100) includes load monitoring means for monitoring operating states of the multiple information processing apparatuses; information-processing-apparatus selecting means for selecting one of the information processing apparatuses that are to execute parts of the processing task, in accordance with their operating states; receiving means for receiving a processing result of a part task executed by each individual selected information processing apparatus; and processing-result determining means for determining whether or not the receiving means has already received a processing result having the same content as that just received, and if not storing the received processing result.

## Description

The present invention relates to a load distributing apparatus for distributing information processing among multiple information processing apparatuses.

A load distributing apparatus is an apparatus for distributing a processing task or job, for which a request was issued from a client terminal, to multiple information processing apparatuses, to thereby improve the efficiency of the processing.

However, when a failure occurs in at least one of the information processing apparatuses that execute such processing, the failed information processing apparatus cannot properly perform the divided processing, i.e. its part of the task. Thus, the load distributing apparatus must re-transmit the divided processing to another information processing apparatus, thus posing a problem in that the divided processing is significantly delayed.

Japanese Unexamined Patent Application Publication No. 8-235133 discloses a technology for distributing the load of processing.

Embodiments of a load distributing apparatus according to the present invention may provide a load distributing system that does not perform re-transmission processing for information processing, even when a failure occurs in an information processing apparatus that performs processing.

More specifically, the present invention provides a load distributing apparatus for managing processing, for which a request was issued from a client terminal, over multiple information processing apparatuses. The load distributing apparatus includes: load monitoring means for monitoring operating states of the multiple information processing apparatuses; information-processing-apparatus selecting means for selecting information processing apparatuses that are to execute the processing from the multiple information processing apparatuses, in accordance with the operating states of the multiple information processing apparatuses; receiving means for receiving a processing result of the processing executed by each selected information processing apparatus; and processing-result determining means for determining whether or not the receiving means has already received a processing result having the same content as the received processing result and for obtaining the received processing result when the receiving means has not received a processing result having the same content.

According to a first aspect of the invention, there is provided a load distributing apparatus for distributing a processing task requested by a client terminal, over a plurality of information processing apparatuses, the load distributing apparatus comprising: a controller to control the load distributing apparatus including: means for selecting a group of information processing apparatuses from the plurality of information processing apparatuses, in accordance with operational states of the plurality of information processing apparatuses; means for requesting said group of information processing apparatuses to execute processing in parallel, respectively; means for receiving a processing result of the processing executed by each selected information processing apparatus; and means for determining whether the received processing result is the first obtained from the group of the information processing apparatuses.

In the above load distributing apparatus, preferably, the selecting means divides the processing task into a plurality of sub-tasks, each assigned to a respective group of the information processing apparatuses.

Here, a "group" may contain one or more information processing apparatuses.

The groups of information processing apparatuses may either be mutually-exclusive, or non-exclusive. That is, an information processing apparatus may belong to more than one group at the same time, for example if it has a high processing capacity.

The load distributing apparatus may include data receiving means for receiving data needed to perform the processing task, and data dividing means for dividing the whole of the received data into subsets of data required to perform the respective sub-tasks.

The load distributing apparatus according to the present invention distributes a processing task among multiple information processing apparatuses and causes the information processing apparatuses to process the task in parallel, thereby making it possible to perform processing without re-transmission, even when a failure occurs in one or more of the information processing apparatuses.

Reference will now be made, by way of example, to the accompanying drawings in which:
FIG. 1 is a schematic diagram of a load distributing system according to an embodiment.
FIG. 2 is a schematic diagram of the load distributing system according to the present embodiment.
FIG. 3 is a flow chart of load distributing processing according to the present embodiment.
FIG. 4 is a flow chart of load information monitoring according to the present embodiment.
FIG. 5 is a hardware block diagram of the load distributing apparatus according to the present embodiment.
FIG. 6 is a functional block diagram of a processing unit 503 according to the present embodiment.
FIG. 7 shows a management table 700 according to the present embodiment.
FIG. 8 shows a management table 800 according to the present embodiment.
FIG. 9 is a flow chart of load distributing processing according to the present embodiment.

Modes for carrying out the present invention will be described below.

### First Embodiment

### <Load Distributing System>

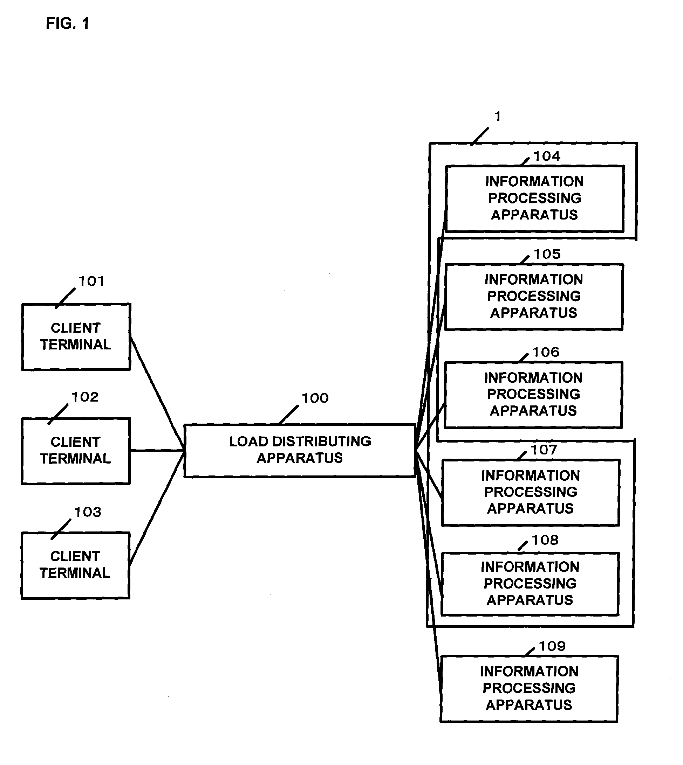

FIG. 1 is a schematic diagram of a load distributing system according to an embodiment. The load distributing system includes a load distributing apparatus 100, client terminals 101, 102, and 103, and information processing apparatuses 104, 105, 106, 107, 108, and 109. The load distributing apparatus 100 is connected to the client terminals 101, 102, and 103. The load distributing apparatus 100 is also connected to the information processing apparatuses 104, 105, 106, 107, 108, and 109.

The load distributing apparatus 100 monitors a failure in the information processing apparatuses 104, 105, 106, 107, 108, and 109. The load distributing apparatus 100 transmits monitor packets to the information processing apparatuses 104, 105, 106, 107, 108, and 109 at intervals of a predetermined time. The information processing apparatuses 104, 105, 106, 107, 108, and 109 transmit response packets relative to the monitor packets to the load distributing apparatus 100. The load distributing apparatus 100 monitors whether or not the response packets are transmitted to thereby monitor whether or not the information processing apparatuses 104, 105, 106, 107, 108, and 109 operate properly. When the load distributing apparatus 100 receives a response packet within a predetermined time, the load distributing apparatus 100 determines that the information processing apparatus that has transmitted the response packet is operating properly. When the load distributing apparatus 100 does not receive a response packet even when a predetermined time has passed, the load distributing apparatus 100 determines that a failure has occurred in the information processing apparatus that does not transmit a response packet.

The load distributing apparatus 100 further monitors the operating states of the information processing apparatuses 104, 105, 106, 107, 108, and 109. More specifically, the load distributing apparatus 100 monitors load information of each of the information processing apparatuses 104, 105, 106, 107, 108, and 109. The load information includes a load ratio of a CPU included in each information processing apparatus and information indicating the number of processings (processes, threads) being executed by the information processing apparatus (the information will hereinafter be referred to as a "processing count"). Each of the information processing apparatuses 104, 105, 106, 107, 108, and 109 issues, at intervals of a predetermined time, a notification indicating the corresponding load information at that point of time to the load distributing apparatus 100. In the load distributing apparatus 100, a management table 700 is stored in a storage unit 507. After receiving the load information, the load distributing apparatus 100 overwrites the CPU load ratios and the processing counts of the information processing apparatuses 104, 105, 106, 107, 108, and 109 with the load information to thereby update the management table 700, the CPU load ratios and the processing counts being shown in the management table 700. Thus, the load distributing apparatus updates the management table 700, every time the load distributing apparatus receives the load information. By referring to the management table 700, the load distributing apparatus 100 can recognize the operating states of the information processing apparatuses 104, 105, 106, 107, 108, and 109.

Upon receiving a processing-request requesting packet from the client terminal 101, 102, or 103, the load distributing apparatus 100 obtains processing data (data to be processed) corresponding to the request packet. The load distributing apparatus 100 distributes the processing data among the information processing apparatuses 104, 105, 106, 107, 108, and 109 for performing processing.

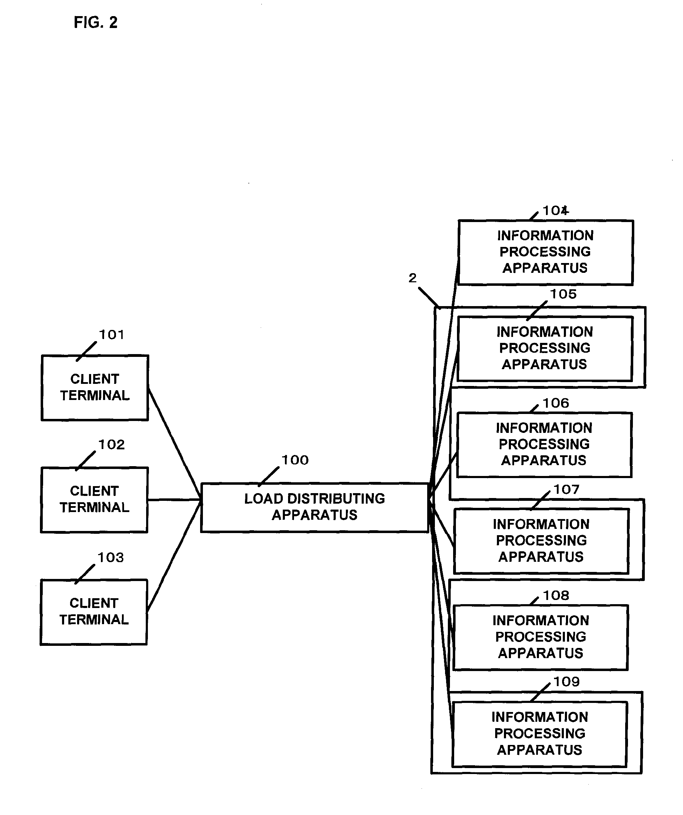

A description in the present embodiment is given of an example of a case in which a single processing (processing task) from the client terminal 101 is divided into two processings (sub-tasks). Although the client terminals 102 and 103 issue requests for executing processings in the same manner as the client terminal 101, the descriptions thereof will be omitted hereinafter. The client terminal 101 transmits a request packet to the load distributing apparatus 100. The load distributing apparatus 100 divides processing data corresponding to the request packet into two divided processings 1 and 2 (see Figs. 1 and 2 respectively). The load distributing apparatus 100 refers to the size of the processing task (hereinafter referred to as "processing size information") and the number of information processing apparatuses connected to the load distributing apparatus 100 to determine the number of processings (processes or sub-tasks) into which the processing corresponding to the processing request is to be divided. The processing size information is contained in the processing data. Specifically, the load distributing apparatus 100 stores, in the storage unit 507, a division table in which the number of divisions is preset according to the processing size information. The load distributing apparatus 100 refers to the division table to select the number of parts into which the processing task is to be divided. When more information processing apparatuses than the selected number of divisions are connected to the load distributing apparatus 100, the load distributing apparatus 100 generates divided processings (sub-tasks) corresponding to the selected number of divisions. When the number of information processing apparatuses connected to the load distributing apparatus 100 is smaller than the selected number of divisions, the load distributing apparatus 100 generates a number of sub-tasks corresponding to the number of information processing apparatuses connected to the load distributing apparatus 100. In the present embodiment, "2" is selected as the number of processing divisions from the division table. The number of information processing apparatuses connected to the load distributing apparatus 100 is 6, that is, the information processing apparatuses 104 to 109, and is greater than the selected number of divisions, that is, 2. Thus, the processing task is divided into two pieces or sub-tasks 1 and 2. Each of the sub-tasks 1 and 2 has a division header indicating that it is divided processing. The division header also indicates that which portions of the whole processing task are to be performed by the sub-tasks 1 and 2.

FIG. 1 schematically shows that the load distributing apparatus 100 issues requests for executing sub-task 1 to the information processing apparatuses 104, 107, and 108 as shown in frame 1. FIG. 2 schematically shows that the load distributing apparatus 100 issues requests for executing sub-task 2 to the information processing apparatuses 105, 107, and 109 as shown in frame 2.

Thus, it is possible for the same information processing apparatus to be assigned more than one sub-task as in the case of apparatus 107.

The load distributing apparatus 100 refers to the management table 700 as request determination criteria. Specifically, the load distributing apparatus 100 refers to the CPU load ratios of the information processing apparatuses 104 to 109, the ratios being shown in the management table 700, and issues requests for executing sub-tasks to information processing apparatuses having low CPU load ratios. After first issuing the requests for executing sub-task 1 (divided processing 1) to the information processing apparatuses 104, 107, and 108, the load distributing apparatus 100 issues requests for executing sub-task 2 (divided processing 2) to the information processing apparatuses 105, 107, and 109. Importance information indicating the importance of the processing is attached to the processing requests. The importance information indicates how many information processing apparatuses are to be used for each divided processing. In the present embodiment, the importance information indicates that three information processing apparatuses are to be used for each of the divided processings 1 and 2.

The group of information processing apparatuses 104, 107, and 108 execute the divided processing 1 and the group of information processing apparatuses 105, 107, and 109 execute the divided processing 2. Upon completing their respective sub-task, the information processing apparatuses 104, 107, and 108 transmit divided-processing results 1, which are processing results of the divided processing 1, to the load distributing apparatus 100. Similarly, upon completing their respective sub-task, the information processing apparatuses 105, 107, and 109 transmit divided-processing results 2, which are processing results of the divided processing 2, to the load distributing apparatus 100.

Each of apparatuses 104, 107 and 108 executes the same sub-task separately and in parallel with one another. In other words, each sub-task is processed redundantly if sufficient information processing apparatuses are available.

The speeds at which the information processing apparatuses 104, 107, and 108 process the divided processing 1 are generally different from each other.
Thus, in general, the timings at which the load distributing apparatus 100 receives the divided-processing results 1 from the information processing apparatuses 104, 107, and 108 are different from each other. The load distributing apparatus 100 determines whether or not a divided-processing result 1 received from the information processing apparatus 104, 107, or 108 is one received for the first time. Upon determining that the received divided-processing result 1 is one received for the first time, the load distributing apparatus 100 stores the divided-processing result 1 in a memory 506. Upon determining that the received divided-processing result 1 is not one received for the first time, the load distributing apparatus 100 discards the divided-processing result 1. In this case, in the load distributing apparatus 100, a divided-processing result 1 that was received for the first time is stored in the memory 506.

Similarly, the speeds at which the load distributing apparatus 100 and the information processing apparatuses 105, 107, and 109 process their sub-task are generally different from each other. Thus, in general, the timings at which the load distributing apparatus 100 receives the divided-processing results 2 from the information processing apparatuses 105, 107, and 109 are different from each other. The load distributing apparatus 100 determines whether or not a divided-processing result 2 received from the information processing apparatuses 105, 107, or 109 is one received for the first time. Upon determining that the received divided-processing result 2 is one received for the first time, the load distributing apparatus 100 stores the divided-processing result 2 in the memory 506. Upon determining that the received divided-processing result 2 is not one received for the first time, the load distributing apparatus 100 discards the divided-processing result 2. In this case, in the load distributing apparatus 100, the divided-processing result 2 that was received for the first time is stored in the memory 506. After storing the divided-processing result 1 and the divided-processing result 2 in the memory 506, the load distributing apparatus 100 combines the divided-processing result 1 and the divided-processing result 2 to generate a processing result. The divided-processing result 1 is a processing result for the divided processing 1 and the divided-processing result 2 is a processing result for the divided processing 2. The divided-processing results 1 and 2 have division headers of the divided processings 1 and 2, respectively. Using the division headers, the load distributing apparatus 100 combines the divided-processing result 1 and the divided-processing result 2 to generate the processing result for the whole task.

The load distributing apparatus 100 transmits the processing result to the client terminal 101. After transmitting the processing result to the client terminal 101, the load distributing apparatus 100 deletes the processing result stored in the memory.

The request packet that each of the client terminals 101, 102, and 103 transmits to the load distributing apparatus 100 has a transmission-destination IP address indicating a transmission destination. The transmission-destination IP address is the IP address of the load distributing apparatus 100. Each of the client terminals 101, 102, and 103 refers to the transmission-destination IP address attached to the processing request to transmit the processing request to the load distributing apparatus 100. The load distributing apparatus 100 (or each of the client terminals 101, 102, and 103) divides processing data corresponding to the request packet into parts suitable for execution as sub-tasks (divided processings). The load distributing apparatus 100 specifies, as the transmission-destination IP addresses of each divided processing, the IP addresses of information processing apparatuses that are to execute each divided processing. In this case, for example, the transmission-destination IP addresses of the divided processing 1 are the IP addresses of the group of information processing apparatuses 104, 107, and 108 and the transmission-destination IP addresses of the divided processing 2 are the IP addresses of the information processing apparatuses 105, 107, and 109. The load distributing apparatus 100 refers to the IP addresses attached to each divided processing and transmits the relevant data to the information processing apparatuses corresponding to the IP addresses. After obtaining divided-processing results, the information processing apparatuses 104 to 109 attach the IP address of the load distributing apparatus 100 thereto and transmit the divided-processing results to the load distributing apparatus 100. The load distributing apparatus 100 combines the divided-processing results to generate a processing result of the task originally requested by the client and adds, to the processing result, the IP address of a client terminal that issued the processing request. The load distributing apparatus 100 then transmits the processing result to the client terminal.

### <Configuration of Load Distributing Apparatus>

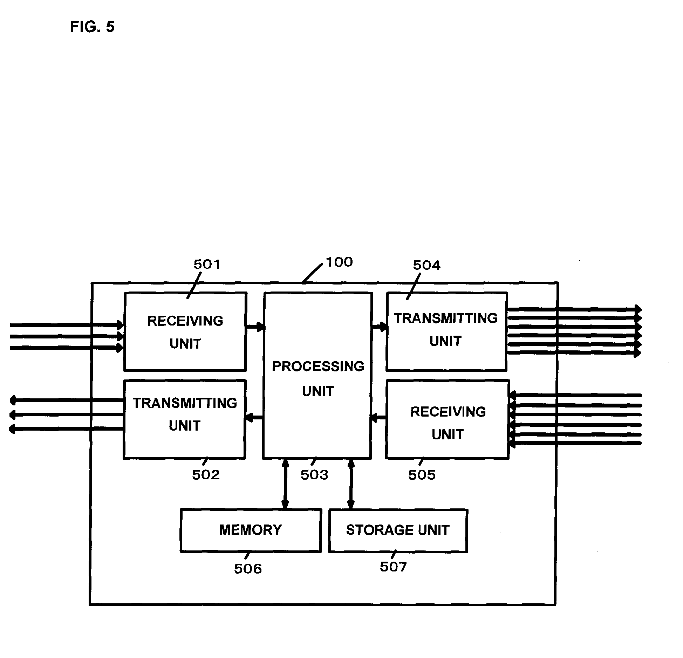

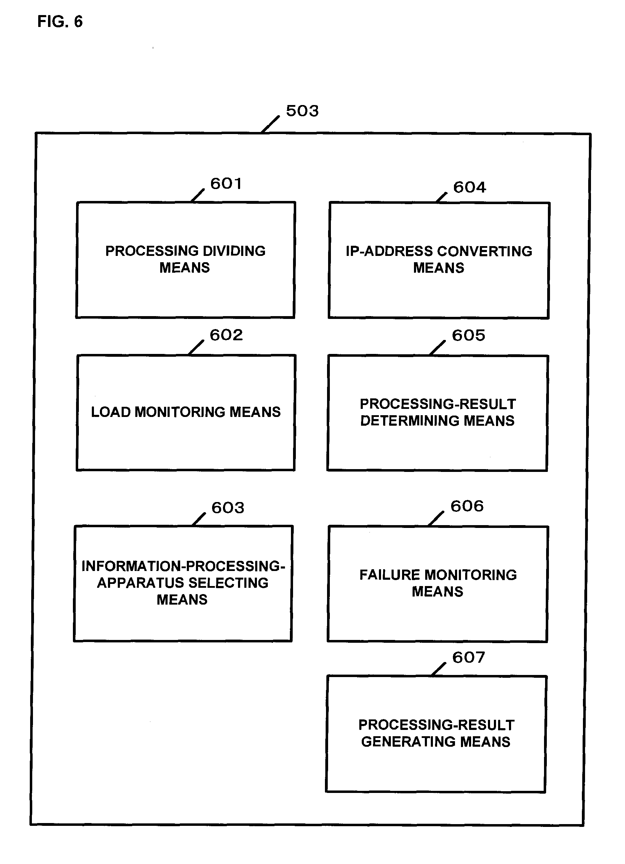

FIG. 5 is a hardware block diagram of the load distributing apparatus 100 according to the present embodiment. FIG. 6 is a functional block diagram of a processing unit 503 according to the present embodiment. The load distributing apparatus 100 includes a receiving unit 501, a transmitting unit 502, the processing unit 503, a transmitting unit 504, a receiving unit 505, the memory 506, and the storage unit 507.

The receiving unit 501 and the transmitting unit 502 are connected to the client terminals 101, 102, and 103. The receiving unit 501 receives a request packet indicating a processing request from the client terminal 101, 102, or 103. The transmitting unit 502 transmits a processing result corresponding to the request packet, received from the client terminals 101, 102, or 103, to the client terminal 101, 102, or 103 that transmitted the request packet. The receiving unit 501 sends the request packet, received from the client terminal 101, 102, or 103, to the processing unit 503. The receiving unit 501 further receives a set of processing data, corresponding to the request packet from the client terminal 101 102 or 103, and sends the processing data to the processing unit 503.

The processing unit 503 sends a processing result corresponding to the processing request, received from the client terminal 101, 102, or 103, to the transmitting unit 502. The transmitting unit 504 and the receiving unit 505 are connected to the information processing apparatuses 104, 105, 106, 107, 108, and 109. The processing unit 503 assigns the information processing apparatus to one or more sub-tasks or to a group for executing a sub-task of the requested processing task, divides the set of processing data into subsets for divided processing and uses the transmitting unit 504 to transmit each data subset to selected groups (which may be non-exclusive, i.e. overlapping) of the information processing apparatuses 104, 105, 106, 107, 108, and 109. Each information processing apparatus that has received a data subset for divided processing transmits a divided-processing result, which is a processing result of the sub-task assigned to its group, to the load distributing apparatus 100. The load distributing apparatus 100 uses the receiving unit 505 to receive the divided-processing result. The processing unit 503 includes a CPU (Central Processing Unit), a RAM (Random Access Memory), and so on and executes processing dividing means 601, load monitoring means 602, information-processing-apparatus selecting means 603, IP-address converting means 604, processing-result determining means 605, and failure monitoring means 606 shown in FIG. 6.

Programs for the processing dividing means 601, the load monitoring means 602, the information-processing-apparatus selecting means 603, the IP-address converting means 604, the processing-result determining means 605, and the failure monitoring means 606 are stored in the storage unit 507. The processing unit 503 reads the programs for the processing dividing means 601, the load monitoring means 602, the information-processing-apparatus selecting means 603, the IP-address converting means 604, the processing-result determining means 605, and the failure monitoring means 606, the programs being stored in the storage unit 507, and executes each processing.

The load distributing apparatus 100 executes the failure monitoring means 606 to transmit monitor packets to the information processing apparatuses 104, 105, 106, 107, 108, and 109 via the transmitting unit 504 at intervals of a predetermined time. The information processing apparatuses 104, 105, 106, 107, 108, and 109 transmit response packets relative to the monitor packets to the load distributing apparatus 100. The load distributing apparatus receives the response packets via the receiving unit 505. The failure monitoring means 606 determines that an information processing apparatus that has transmitted a response packet is operating properly. When the load distributing apparatus 100 does not receive a response packet within the predetermined time, the failure monitoring means 606 determines that a failure has occurred, and breaks the connection with the information processing apparatus. This may include eliminating the failed information processing apparatus from the group or groups to which it has been assigned, and if necessary regrouping the remaining information processing apparatuses. The information processing apparatuses 104, 105, 106, 107, 108, and 109 transmit load information to the load distributing apparatus 100 at intervals of a predetermined time. The load distributing apparatus 100 executes the load monitoring means 602 to receive the load information of the respective information processing apparatuses from the information processing apparatuses 104, 105, 106, 107, 108, and 109. After receiving the load information, the load monitoring means 602 updates the CPU load ratios and the processing counts of the information processing apparatuses 104, 105, 106, 107, 108, and 109, the CPU load ratios and the processing counts corresponding to the load information in the management table 700. (

For example, when the client terminal 101 transmits a request packet to the load distributing apparatus 100, the load distributing apparatus 100 executes the processing dividing means 601 to divide the processing request into multiple divided processings (sub-tasks). The processing dividing means 601 refers to the processing size information, which is contained in the processing data, and the division table, which is stored in the storage unit 507. The processing dividing means 601 selects a number of divisions which is shown in the division table and which corresponds to the processing size information. The processing dividing means 601 then compares the selected number of divisions with the number of information processing apparatuses connected to the load distributing apparatus 100. When more information processing apparatuses than the selected number of divisions are connected to the load distributing apparatus 100, the processing dividing means 601 groups the information processing apparatuses corresponding to the selected number of divisions (sub-tasks). When the number of information processing apparatuses connected to the load distributing apparatus 100 is smaller than the selected number of divisions, the processing dividing means 601 reduces the member of divisions as appropriate. For example, it may assign sub-tasks individually to the connected information processing apparatuses. Alternatively, the same information processing apparatus may be assigned more than one sub-task if necessary.

Next, the load distributing apparatus 100 executes the information-processing-apparatus selecting means 603 and refers to the management table 700 and the importance information attached to the request packet. Based on the importance information, the information-processing-apparatus selecting means 603 determines the number of information processing apparatuses to which requests for executing the same divided processing (sub-task) are to be issued. The information-processing-apparatus selecting means 603 refers to the CPU load ratios in the management table 700 to select, in increasing order of the CPU load ratios, information processing apparatuses corresponding to the number of information processing apparatuses to which the requests for executing the same divided processing are to be issued.

The IP address converting means 604 attaches the IP addresses of all the selected information processing apparatuses to the (data subset for the) divided processing and transmits the data to the information processing apparatuses having those IP addresses. Similarly, for each other sub-task, the group of information processing apparatuses to execute the sub-task is determined, information processing apparatuses corresponding to the determined number are selected in increasing order of the CPU load ratios, and the relevant subset of data is transmitted to those information processing apparatuses.

Each information processing apparatus that has completed the execution of its assigned sub-task transmits a divided-processing result to the load distributing apparatus. The load distributing apparatus 100 receives the divided-processing result via the receiving unit 505. The load distributing apparatus 100 executes the processing-result determining means 605 to determine whether or not a processing result having the same content as the received divided-processing result exists in the memory 506. When a divided-processing result having the same content does not exist in the memory 506 (i.e. this is the first time the sub-task has been completed), the processing-result determining means 605 stores the received divided-processing result in the memory 506. When a divided-processing result having the same content already exists in the memory 506 (i.e., another information processing apparatus has already finished the sub-task), the processing-result determining means 605 discards the received divided-processing result. In the same manner, with respect to each other sub-task, the processing-result determining means 605 determines whether or not a divided-processing result is already stored in the memory 506.
When a divided-processing result having the same content as the received divided-processing result does not exist in the memory 506, the processing-result determining means 605 stores the divided-processing result in the memory 506. When a divided-processing result having the same content as the received divided-processing result exists in the memory 506, the processing-result determining means 605 discards the divided-processing result. When divided-processing results corresponding to every sub-task (all types of divided processings) are received, the processing-result generating means 607 is executed to combine all divided-processing results to generate an overall processing result. The processing-result generating means 607 stores the processing result in the memory 506.

The load distributing apparatus 100 transmits the processing result to the client terminal that transmitted the processing request corresponding to the processing result, i.e., to the client terminal 101 to which the processing result is to be transmitted. Thereafter, the load distributing apparatus 100 deletes the processing result and the divided-processing results which are stored in the memory 506.

### <Flow of Load Distributing Apparatus>

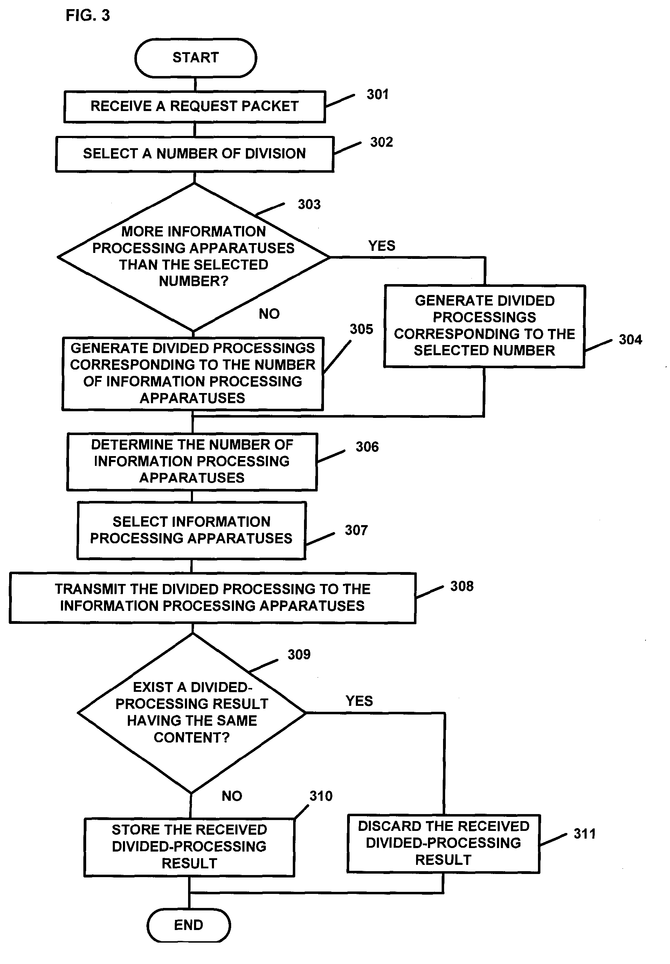

FIG. 3 is a flow chart of load distributing processing according to the present embodiment. The load distributing apparatus 100 receives a request packet from the client terminal 101, 102, or 103 (step S301). The processing dividing means 601 refers to the processing size information and the division table stored in the storage unit 507 and selects a number of divisions (number of sub-tasks) which is shown in the division table and which corresponds to the processing size information (step S302). The processing dividing means 601 compares the selected number of divisions with the number of information processing apparatuses connected to the load distributing apparatus 100 (step S303). When more information processing apparatuses than the selected number of divisions are connected to the load distributing apparatus 100, the processing dividing means 601 generates divided processings corresponding to the selected number of divisions (step S304), i.e. the information processing apparatuses are grouped to perform the individual sub-tasks. When the number of information processing apparatuses connected to the load distributing apparatus 100 is smaller than the selected number of divisions, the processing dividing means 601 generates divided processings corresponding to the number of information processing apparatuses connected to the load distributing apparatus 100 (step S305), e.g. the number of sub-tasks is restricted to the available number of information processing apparatuses.

Next, the information-processing-apparatus selecting means 603 refers to the management table 700 and the importance information attached to the processing request. Based on the importance information, the information-processing-apparatus selecting means 603 determines the number of information processing apparatuses to which requests for executing the same divided processing are to be issued (step S306). The information-processing-apparatus selecting means 603 refers to the CPU load ratios in the management table 700 to select, in increasing order of the CPU load ratios, information processing apparatuses corresponding to the number of information processing apparatuses to which the requests for executing the same divided processing are to be issued (step S307).

The IP address converting means 604 then attaches the IP addresses of all the selected information processing apparatuses to the divided processing (data subset required to process the sub-task) and transmits the (data subset of the) divided processing to the information processing apparatuses having the IP addresses (step S308). Similarly, for another divided processing, the number of information processing apparatuses to which the divided processing is to be transmitted is determined, information processing apparatuses corresponding to the determined number are selected in increasing order of the CPU load ratios, and the divided processing is transmitted to the information processing apparatuses.

The processing-result determining means 605 determines whether or not a divided-processing result having the same content as the received divided-processing result exists in the memory 506 (step S309). If not, the processing-result determining means 605 stores the received divided-processing result in the memory 506 (step S310). When a divided-processing result having the same content already exists in the memory 506, the processing-result determining means 605 discards it (step 311).

### <Flow of Load Information Monitoring>

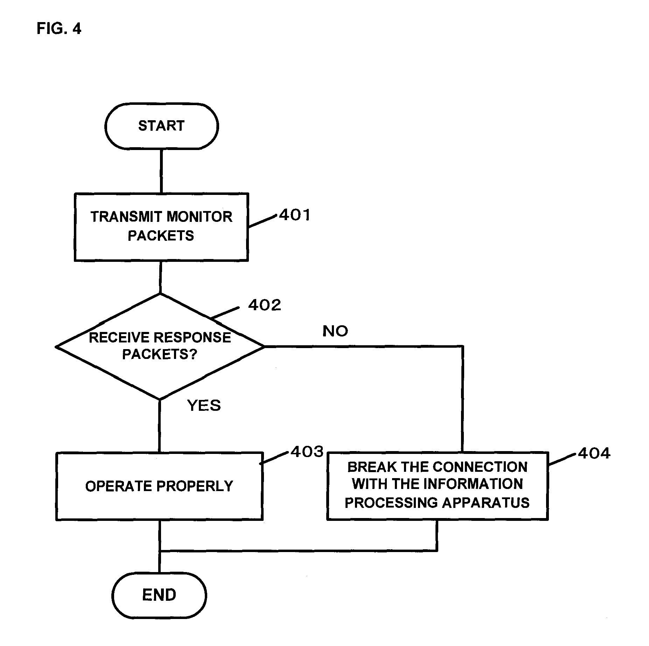

FIG. 4 is a flow chart of load information monitoring of the load distributing apparatus 100 according to the present embodiment. The failure monitoring means 606 transmits monitor packets to the information processing apparatuses 104, 105, 106, 107, 108, and 109 via the transmitting unit 504 at intervals of a predetermined time (step S401). The failure monitoring means 606 monitors response packets transmitted from the information processing apparatuses 104, 105, 106, 107, 108, and 109 and determines whether or not response packets are received at intervals of a predetermined time (step S402). The failure monitoring means 606 determines that the information processing apparatus that has transmitted a response packet is operating properly (step S403). When the load distributing apparatus 100 does not receive a response packet even after a predetermined time has passed, the failure monitoring means 606 determines that a failure has occurred in the information processing apparatus that is supposed to transmit the response packet, and breaks the connection with the information processing apparatus (step S404).

### <Management Table>

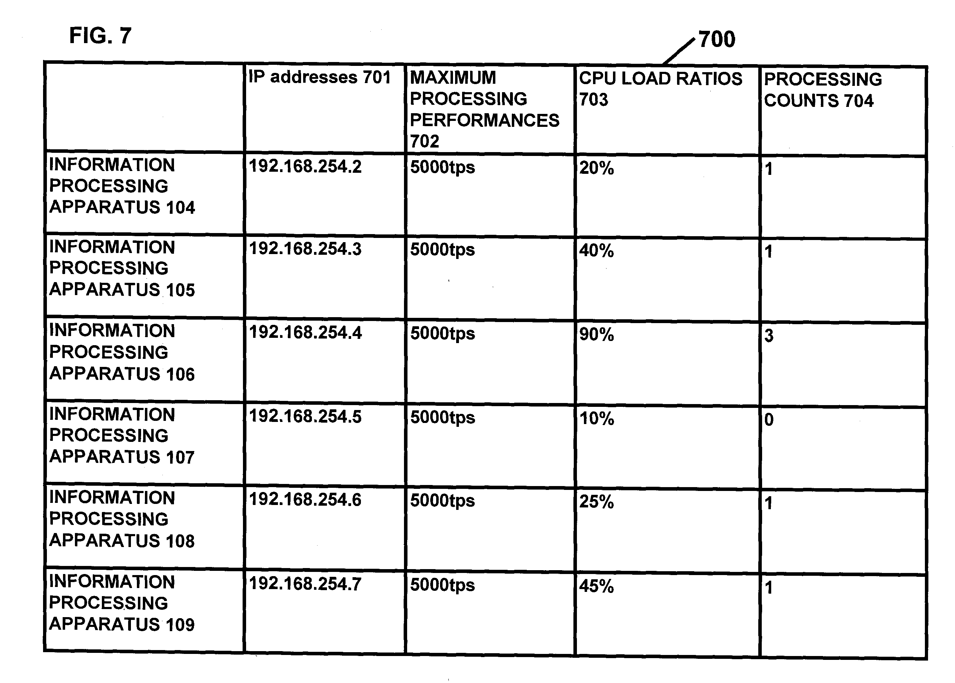

FIG. 7 shows the management table 700 according to the present embodiment. IP addresses 701, maximum processing performances 702, CPU load ratios 703, and processing counts 704 of the information processing apparatuses 104, 105, 106, 107, 108, and 109 are shown in the management table 700. The IP address 701 of the information processing apparatus 104 is "193.168.254.2", the maximum processing performance 702 is "5000 tps", the CPU load ratio 703 is "20%", and the processing count 704 is "1". The IP address 701 of the information processing apparatus 105 is "193.168.254.3", the maximum processing performance 702 is "5000 tps", the CPU load ratio 703 is "40%", and the processing count 704 is "1". The IP address 701 of the information processing apparatus 106 is "193.168.254.4", the maximum processing performance 702 is "5000 tps", the CPU load ratio 703 is "90%", and the processing count 704 is "3". The IP address 701 of the information processing apparatus 107 is "193.168.254.5", the maximum processing performance 702 is "5000 tps", the CPU load ratio 703 is "10%", and the processing count 704 is "0". The IP address 701 of the information processing apparatus 108 is "193.168.254.6", the maximum processing performance 702 is "5000 tps", the CPU load ratio 703 is "25%", and the processing count 704 is "1". The IP address 701 of the information processing apparatus 109 is "193.168.254.7", the maximum processing performance 702 is "5000 tps", the CPU load ratio 703 is "45%", and the processing count 704 is "1". In the present embodiment, for simplicity, the maximum processing performances 702 of the information processing apparatuses 104, 105, 106, 107, 108, and 109 are the same, i.e., "5000 tps". "tps" means "transactions per second" and is a unit representing the number of processings executable per unit time.

In the present embodiment, after selecting information processing apparatuses to which requests for executing the divided processing 1 are to be issued, the load distributing apparatus 100 selects information processing apparatuses to which requests for executing the divided processing 2 are to be issued. The information-processing-apparatus selecting means 603 refers to the CPU load ratios 703 in the management table 700 and issues requests for executing the divided processing 1 to information processing apparatuses whose CPU load ratios 703 are low. The information processing apparatuses whose CPU load ratios 703 are low are the information processing apparatus 104 whose CPU load ratio 703 is "20%", the information processing apparatus 107 whose CPU load ratio 703 is "10%", and the information processing apparatus 108 whose CPU load ratio 703 is "25%". Thus, the information-processing-apparatus selecting means 603 issues requests for executing the divided processing 1 to the group of information processing apparatuses 104, 107, and 108. The information processing apparatuses 104, 105, 106, 107, 108, and 109 then transmit load information to the load distributing apparatus 100. The load monitoring means 602 receives the load information of the information processing apparatuses from the information processing apparatuses 104, 105, 106, 107, 108, and 109. After receiving the load information, the load monitoring means 602 updates the CPU load ratios 703 and the processing counts 704 of the information processing apparatuses 104, 105, 106, 107, 108, and 109, the CPU load ratios 703 and the processing counts 704 corresponding to the load information in the management table 700.

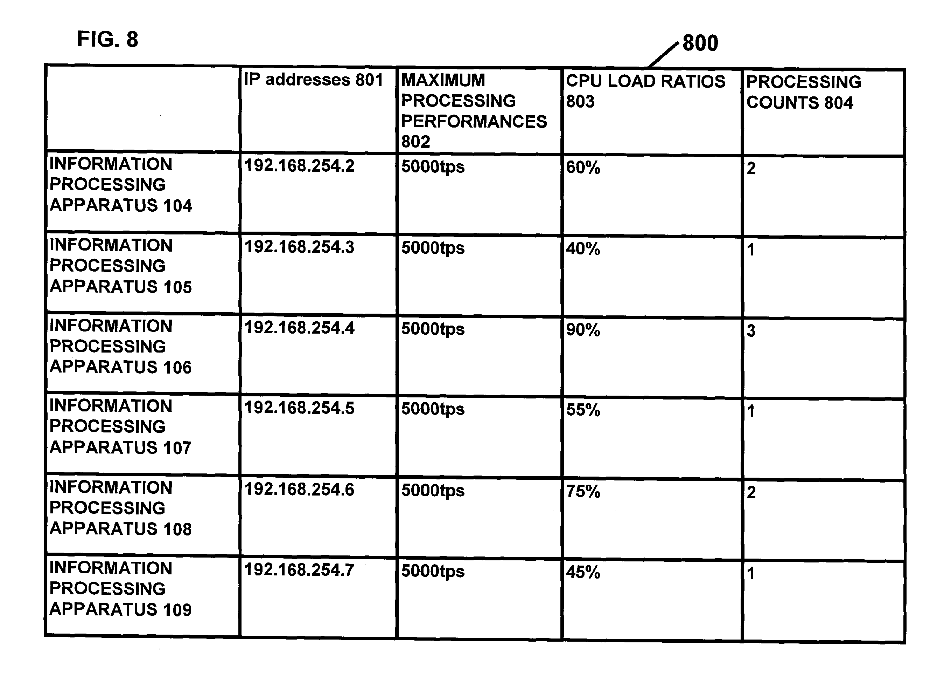

FIG. 8 shows a management table 800 according to the present embodiment. The management table 800 is obtained by updating the management table 700, which updating is performed by the load monitoring means 602 after the information-processing-apparatus selecting means 603 issues requests for executing the divided processing 1 to the information processing apparatuses 104, 107, and 108.

The IP address 801 of the information processing apparatus 104 is "193.168.254.2", the maximum processing performance 802 is "5000 tps", the CPU load ratio 803 is "60%", and the processing count 804 is "2". The IP address 801 of the information processing apparatus 105 is "193.168.254.3", the maximum processing performance 802 is "5000 tps", the CPU load ratio 803 is "40%", and the processing count 804 is "1". The IP address 801 of the information processing apparatus 106 is "193.168.254.4", the maximum processing performance 802 is "5000 tps", the CPU load ratio 803 is "90%", and the processing count 804 is "3". The IP address 801 of the information processing apparatus 107 is "193.168.254.5", the maximum processing performance 802 is "5000 tps", the CPU load ratio 803 is "55%", and the processing count 804 is "1". The IP address 801 of the information processing apparatus 108 is "193.168.254.6", the maximum processing performance 802 is "5000 tps", the CPU load ratio 803 is "75%", and the processing count 804 is "2". The IP address 801 of the information processing apparatus 109 is "193.168.254.7", the maximum processing performance 802 is "5000 tps", the CPU load ratio 803 is "45%", and the processing count 804 is "1".

The information-processing-apparatus selecting means 603 refers to the CPU load ratios 803 in the management table 800 and issues requests for executing the divided processing 2 to information processing apparatuses whose CPU load ratios 803 are low. The information processing apparatuses whose CPU load ratios 803 are low are the information processing apparatus 105 whose CPU load ratio 803 is "40%", the information processing apparatus 107 whose CPU load ratio 803 is "55%", and the information processing apparatus 109 whose CPU load ratio 803 is "45%". Thus, the information-processing-apparatus selecting means 603 issues requests for executing the divided processing 2 to the group of information processing apparatuses 105, 107, and 109. The information processing apparatuses 104, 105, 106, 107, 108, and 109 then transmit load information to the load distributing apparatus 100. The load monitoring means 602 receives the load information of the information processing apparatuses from the information processing apparatuses 104, 105, 106, 107, 108, and 109. After receiving the load information, the load monitoring means 602 updates the CPU load ratios 803 and the processing counts 804 of the information processing apparatuses 104, 105, 106, 107, 108, and 109, the CPU load ratios 803 and the processing counts 804 corresponding to the load information in the management table 800.

### Second Embodiment

In a second embodiment, upon receipt of a sub-task processing result already stored in the memory 506, the load distribution apparatus halts further execution of the same sub-task. That is, when a divided-processing result having the same content as the received divided-processing result exists in the memory 506, the processing-result determining means 605 issues requests for suspending the divided processing to information processing apparatuses that are performing the divided processing corresponding to the received divided-processing result.

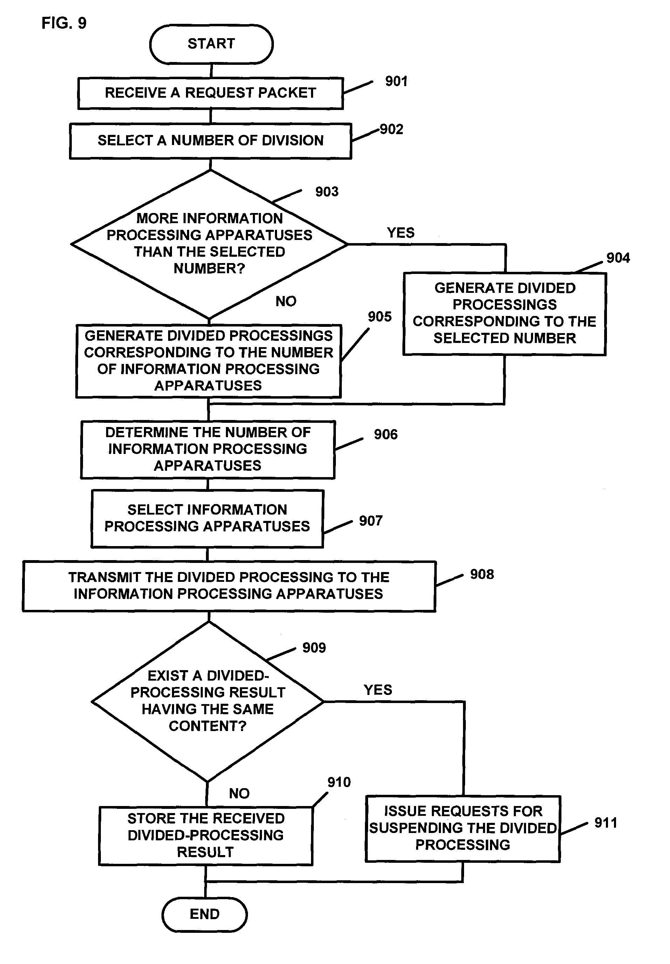

FIG. 9 is a flow chart of load distributing processing according to the present embodiment. The client terminal 101, 102, or 103 transmits a request packet to the load distributing apparatus 100 (step S901). The processing dividing means 601 refers to the processing size information and the division table stored in the storage unit 507 and selects a number of divisions which is shown in the division table and which corresponds to the processing size information (step S902). The processing dividing means 601 compares the selected number of divisions with the number of information processing apparatuses connected to the load distributing apparatus 100 (step S903). When more information processing apparatuses than the selected number of divisions are connected to the load distributing apparatus 100, the processing dividing means 601 generates sub-tasks corresponding to the selected number of divisions (step S904). When the number of information processing apparatuses connected to the load distributing apparatus 100 is smaller than the selected number of divisions, the processing dividing means 601 generates sub-tasks corresponding to the number of information processing apparatuses connected to the load distributing apparatus 100 (step S905).

The information-processing-apparatus selecting means 603 then refers to the management table 700 and the importance information attached to the processing request. Based on the importance information, the information-processing-apparatus selecting means 603 determines the group of information processing apparatuses to which requests for executing the same sub-task are to be issued (step S906). The information-processing-apparatus selecting means 603 refers to the CPU load ratios in the management table 700 to select, in increasing order of the CPU load ratios, information processing apparatuses corresponding to the number of information processing apparatuses to which the requests for executing the same divided processing are to be issued (step S907).

The IP address converting means 604 then attaches the IP addresses of all the selected information processing apparatuses to the divided processing and transmits the divided processing to the information processing apparatuses having the IP addresses (step S908). Similarly, for another divided processing, the number of information processing apparatuses to which the divided processing is to be transmitted is determined, information processing apparatuses corresponding to the determined number are selected in increasing order of the CPU load ratios, and the divided processing is transmitted to the information processing apparatuses.

The processing-result determining means 605 determines whether or not a processing result having the same content as the received divided-processing result exists in the memory 506 (step S909). When a divided-processing result having the same content does not exist in the memory 506, the processing-result determining means 605 stores the received divided-processing result in the memory 506 (step S910). When a divided-processing result having the same content already exists in the memory 506, the processing-result determining means 605 issues requests for suspending the divided processing to all the information processing apparatus, in the relevant group, i.e. to information processing apparatuses that are performing the divided processing corresponding to the divided-processing result (step 911). The information processing apparatuses that have received the requests for suspending the divided processing terminate the divided processing.

It should be understood that the technical ideas according to the present invention can be construed in various levels and variations in the range of higher to lower concepts and the present invention is not limited to the embodiments above.

## Claims

1. A load distributing apparatus for distributing a processing task requested by a client terminal, over a plurality of information processing apparatuses, the load distributing apparatus comprising:
a controller to control the load distributing apparatus including:
means for selecting a group of information processing apparatuses from the plurality of information processing apparatuses, in accordance with operational states of the plurality of information processing apparatuses;
means for requesting said group of information processing apparatuses to execute processing in parallel, respectively;
means for receiving a processing result of the processing executed by each selected information processing apparatus; and
means for determining whether the received processing result is the first obtained from the group of the information processing apparatuses.

2. The load distributing apparatus according to claim 1, wherein the controller further comprises:
means for discarding a received processing result subsequently obtained from the group of the information processing apparatuses.

3. The load distributing apparatus according to claim 1, wherein the controller further comprises:
means for obtaining the received processing result from any information processing apparatus in the group; and
means for issuing a request for terminating the processing to the other information processing apparatuses in the group.

4. The load distributing apparatus according to claim 1, 2, or 3, wherein the controller further comprises:
means for combining a plurality of processing results obtained by respective groups of the information processing apparatuses; and
means for transmitting the combined processing results to the client terminal.

5. The load distributing apparatus according to claim 4, wherein said means for selecting is arranged to divide the processing task into a plurality of sub-tasks each assigned to a respective group of the information processing apparatuses.

6. The load distributing apparatus according to any preceding claim, wherein the operational states indicate CPU loads of the information processing apparatuses.

7. The load distributing apparatus according to any preceding claim, wherein the controller obtains load information indicating the operational states of information processing apparatuses respectively from the information processing apparatuses.

8. The load distributing apparatus according to claim 7, wherein the controller obtains the load information at intervals of a predetermined time.

9. The load distributing apparatus according to claim 8, wherein the process of the controller further comprises:
breaking a connection with an information processing apparatus which does not transmit the load information, when the load distributing apparatus does not receive the load information within the predetermined time.

10. A load distributing method for distributing a processing task requested by a client terminal, over a plurality of information processing apparatuses, the load distributing method comprising the steps of:
selecting a group of information processing apparatuses from the plurality of information processing apparatuses, in accordance with a operational states of the plurality of information processing apparatuses;
requesting said group of information processing apparatuses to execute the processing in parallel, respectively;
receiving a processing result of the processing executed by each selected information processing apparatus; and
determining whether the received processing result is first such result obtained from the group of the information processing apparatuses.

11. A computer-readable recording medium that stores a computer program for distributing a processing task requested by a client terminal, over a plurality of information processing apparatuses by controlling a load distributing apparatus according to a process comprising:
selecting a group of information processing apparatuses from the plurality of information processing apparatuses, in accordance with operational states of the plurality of information processing apparatuses;
requesting said group of information processing apparatuses to execute the processing in parallel, respectively;
receiving a processing result of the processing executed by each selected information processing apparatus; and
determining whether the received processing result is the first obtained from the group of the information processing apparatuses.
